# EUROPÄISCHE PATENTSCHRIFT

(11) **EP 3 949 352 B1**
(45) Veröffentlichungstag und Bekanntmachung des Hinweises auf die Patenterteilung: **29.03.2023**
(21) Anmeldenummer: 20732769.3
(22) Anmeldetag: 02.06.2020
(51) Int. Cl.: H04L 67/04, H04L 67/12, H04W 4/38, H04L 67/52, H04L 67/62, H04W 4/02

(54) **ENERGIEEFFIZIENTE KOMMUNIKATION ZWISCHEN SENSOR UND SATELLIT**
ENERGY EFFICIENT COMMUNICATION BETWEEN A SENSOR AND A SATELLITE
COMMUNICATION À EFFICACITÉ ÉNERGÉTIQUE ENTRE UN CAPTEUR ET UN SATELLITE

(30) Priorität: 06.06.2019 EP 19178817
(43) Veröffentlichungstag der Anmeldung: 09.02.2022
(73) Patentinhaber: Siemens Aktiengesellschaft, 80333 München (DE)
(72) Erfinder: HUTH, Hans-Peter, 80638 München (DE); ZEIGER, Florian, 85635 Höhenkirchen-Siegertsbrunn (DE)
(74) Vertreter: Siemens Patent Attorneys
(86) Internationale Anmeldenummer: PCT/EP2020/065160
(87) Internationale Veröffentlichungsnummer: WO 2020/245095

(56) Entgegenhaltungen:
- EP-A2- 1 050 978
- SIEMENS AG: "Sensor data delivery time optimization for satellite systems", PRIOR ART PUBLISHING GMBH, PRIOR ART PUBLISHING GMBH, MANFRED-VON-RICHTHOFEN-STR. 9, 12101 BERLIN GERMANY, Bd. www.priorartregister.com, 23. April 2019 (2019-04-23), Seiten 1-3, XP007022529,
- DE SANCTIS MAURO ET AL: "Satellite Communications Supporting Internet of Remote Things", IEEE INTERNET OF THINGS JOURNAL, IEEE, USA, Bd. 3, Nr. 1, 1. Februar 2016 (2016-02-01) , Seiten 113-123, XP011595989, DOI: 10.1109/JIOT.2015.2487046

## Beschreibung

Die Erfindung betrifft ein Verfahren zur energieeffizienten Kommunikation zwischen einem Sensor und einem Satelliten. Des Weiteren betrifft die Erfindung einen Sensor, der dazu geeignet ist, energieeffizient mit einem Satelliten zu kommunizieren. Die Erfindung ermöglicht, dass energiesparend Sensordaten von einem Sensor an einen Satelliten gesendet werden können.

Es wird erwartet, dass in zukünftigen, digital vernetzten Systemen Sensoren ihre Daten nicht nur über kabelgebundene oder kabellose Computernetze an andere Teilnehmer versenden, sondern auch über Satelliten. Bei nicht-geostationären Satelliten, also bei Satelliten, die sich nicht immer über demselben Punkt der Erde befinden, besteht die Herausforderung, dass ein Sensor nur in ganz bestimmten, in der Regel vergleichsweise kurzen Zeiträumen Funkkontakt zu dem Satelliten aufnehmen kann. Der örtliche Bereich, in dem ein Sensor sich zu einem bestimmten Zeitpunkt zu befinden hat, um Informationen, beispielsweise Sensordaten, zu dem Satelliten schicken zu können, wird im Rahmen dieser Patentanmeldung als Abdeckungsbereich *(englisch: footprint)* des Satelliten bezeichnet. Da sich bei nicht-erdgebundenen Satelliten der Satellit relativ zu einem auf der Erde befindlichen, stationären Sensor bewegt, befindet sich der Sensor nicht immer im Abdeckungsbereich des Satelliten, sondern nur in bestimmten Zeiträumen. Der Zeitraum, in dem sich der Sensor im Abdeckungsbereich des Satelliten befindet, wird im Rahmen dieser Patentanmeldung als Abdeckungszeitraum bezeichnet.

Satelliten schicken üblicherweise in regelmäßigen Abständen Signale auf die Erde, die in der Regel Informationen bezüglich ihrer Identität (also einer eindeutigen Bezeichnung des Satelliten), ihrer Umlaufbahn und dem Zeitpunkt, zu dem der Satellit das Signal abgesendet hat, enthalten. Diese Signale, die in der Fachsprache auch als "beacons" bezeichnet werden, sendet (oder: strahlt) ein Satellit in der Regel in einem bestimmten Ausstrahlungskegel aus, so dass sie von einem beliebigen Empfänger, der für den Empfang derartiger Signale eingerichtet ist, empfangen werden können.

Ein Sensor, der seine Sensordaten via Satellit an einen Adressaten schicken möchte, ist herkömmlicherweise mit einer Empfangseinheit zum Empfang oben genannter Satellitensignale, das heißt oben genannter *beacons,* ausgestattet. Die Empfangseinheit ist dauerhaft eingeschaltet, um durch den Empfang eines Satellitensignals eines Satelliten zu erkennen, dass sich gerade ein Satellit in Funkreichweite befindet bzw. dass sich, in anderen Worten, der Sensor gerade in dem Abdeckungsbereich eines Satelliten befindet. Diese Information ist für den Sensor essenziell, da der Sensor nur dann seine Sensordaten an den Satelliten senden kann, wenn er sich im momentanen Abdeckungsbereich des Satelliten befindet. Alternativ zu einer dauerhaften Einschaltung der Empfangseinheit kann sich die Empfangseinheit auch in regelmäßigen (oder unregelmäßigen) Intervallen ein- und ausschalten, um ein etwaiges ausgesendetes Satellitensignal zu erkennen.

Da der Sensor keine Information darüber hat, wann sich ihm der nächste Satellit in Funkreichweite nähert, ist die Empfangseinheit zum Empfang von Satellitensignalen in derartigen Sensoren also herkömmlicherweise permanent aktiviert oder sie wird zumindest in regelmäßigen (oder unregelmäßigen) Abständen aktiviert. Eine aktivierte Empfangseinheit verbraucht Strom, das heißt Energie.

Die Veröffentlichung "Sensor data delivery time optimization for satellite systems", Siemens AG, PRIOR ART PUBLISHING GMBH, MANFRED-VON-RICHTHOFEN-STR. 9, 12101 BERLIN GERMANY, Bd. www.priorartregister.com, 23. April 2019 (2019-04-23), Seiten 1-3, XP007022529, diskutiert effektive Sensordatensammlung durch Satellitensysteme.

Nachteilig an herkömmlichen, mit Satelliten kommunizierenden Sensoren ist also, dass ihr Energieverbrauch relativ hoch ist.

Eine Aufgabe der vorliegenden Erfindung ist es, die benötigte Energie für die Kommunikation zwischen einem Sensor und einem oder mehreren Satelliten im Vergleich zum Stand der Technik zu reduzieren.

Diese Aufgabe wird durch das Verfahren und den Sensor der unabhängigen Ansprüche gelöst. Vorteilhafte Ausführungsformen und Weiterbildungen sind in den abhängigen Ansprüchen spezifiziert.

Demgemäß wird ein Verfahren zur Kommunikation zwischen einem Sensor und einem Satelliten bereitgestellt. Der Sensor weist hierbei eine Sendeeinheit zum Senden von Sensordaten vom Sensor zum Satelliten und eine Recheneinheit zum Berechnen einer Position des Satelliten zu einem bestimmten Zeitpunkt auf. Der Satellit ist dafür ausgestaltet, die Sensordaten zu empfangen und beispielsweise an eine Bodenstation weiterzuleiten. Das Verfahren weist die folgenden Schritte auf:
- Berechnen eines Abdeckungszeitraums mithilfe von Bahnparametern des Satelliten und der Position des Sensors, wobei der Abdeckungszeitraum demjenigen Zeitraum entspricht, in dem sich der Sensor in einem Abdeckungsbereich des Satelliten befindet,
- Aktivieren der Sendeeinheit des Sensors während eines Sendezeitraums basierend auf dem berechneten Abdeckungszeitraum, wobei als Sendezeitraum der Abdeckungszeitraum oder ein Teil davon gewählt wird, und
- Senden der Sensordaten vom Sensor an den Satelliten während des Sendezeitraums.

Die Erfinder haben erkannt, dass der Energieverbrauch eines mit einem oder mehreren Satelliten kommunizierenden Sensors signifikant reduziert werden kann, wenn der Sensor nicht permanent in Bereitschaft gehalten wird, seine Sensordaten an den nächsten in Funkreichweite befindlichen Satelliten zu versenden, sondern in dem der Sensor im Voraus berechnet, wann sich ihm der nächste in Frage kommende Satellit nähert und sich erst (und nur) dann gezielt einschaltet. In anderen Worten vermeidet der Sensor, einen Großteil der Zeit auf Standby zu stehen, nur um den Moment abzupassen, wenn sich ein Satellit in Funkreichweite dem Sensor nähert, sondern er schaltet sich gezielt dann ein, wenn er den Überflug eines Satelliten in ausreichender Entfernung erwartet.

Eine energieeffiziente Kommunikation zwischen Sensor und Satellit wird dadurch ermöglicht. Dies resultiert in einem erheblichen Einsparpotenzial an Energie, die für den Betrieb des Sensors aufzuwenden ist - vor allem deswegen, da die Kommunikation eines Sensors mit einem Satelliten einen erheblichen Anteil am gesamten Energiebedarf des Sensors ausmacht. Wird ein Sensor mittels einer Batterie (anstatt eines Netzanschlusses) mit elektrischer Energie versorgt und ist für die Lebensdauer des Sensors die Energieversorgung der limitierende Faktor, hat die Stromersparnis für die Satellitenkommunikation ferner den indirekten Nutzen einer verlängerten Lebensdauer bzw. Einsatzdauer des Sensors.

Der Kern der Erfindung basiert des Weiteren auf der Erkenntnis, dass der Überflug eines Satelliten über einen Sensor deterministisch und damit prinzipiell vorhersagbar ist. Stattet man den Sensor mit einer entsprechenden Recheneinheit aus, ist der Sensor selbst imstande, basierend auf den Bahnparametern des Satelliten (zur Definition der Bahnparameter siehe unten) den Umlauf des Satelliten zu berechnen und zukünftige Positionen des Satelliten vorherzusagen. Dies ist beispielsweise durch Eingabe der Bahnparameter in ein bekanntes Propagationsmodell möglich. Unter Berücksichtigung seiner eigenen Position weiß der Sensor als Resultat also, wann er sich das nächste Mal im Abdeckungsbereich eines Satelliten befindet und kann die Sendeeinheit zu diesem Zeitpunkt gezielt aktivieren.

Die Berechnung der Position des Satelliten zu einem bestimmten Zeitpunkt bezieht sich somit insbesondere auf zukünftige Positionen des Satelliten. Die Recheneinheit soll in anderen Worten dazu imstande sein, vorherzusagen, wann sich zukünftig ein bestimmter Satellit an einem bestimmten Ort befindet.

Dies ist prinzipiell mithilfe von Bahnparametern möglich. Im Rahmen dieser Patentanmeldung werden unter den Bahnparametern eines Satelliten ein Satz von Parametern verstanden, der ausreichend Informationen enthält, um die Position des Satelliten zu prinzipiell jedem beliebigen Zeitpunkt berechnen zu können. Die Bahnparameter enthalten demnach Parameter zur Berechnung der Umlaufbahn des Satelliten, welche geeignet sind, zu jedem Zeitpunkt den Ort des Satelliten auf seiner Umlaufbahn zu berechnen. In anderen Worten beschreiben die Bahnparameter also allgemein die Parameter für die Umlaufbahnen von Objekten, die einen Himmelskörper gemäß den Keplerschen Gesetzen umkreisen.

Die Bahnparameter werden im Fachjargon auch als Satellitenbahnelemente bezeichnet. Sie werden bei der Bahnbestimmung des Objekts verwendet und umfassen insbesondere sechs Bahnelemente eines ungestörten Systems und eine Zeitangabe. Optional enthalten die Bahnparameter zusätzlich Korrekturparameter, die Bahnstörungen beispielsweise durch Reibung mit der Atmosphäre, inhomogenes Gravitationsfeld, Sonnenstürme oder Strahlungsdruck berücksichtigen.

Die Bahnelemente für die meisten Satelliten werden vom amerikanischen Air Force Space Command zur Verfügung gestellt und von Organisationen wie der NASA oder AMSAT als "Two-Line Elements" (TLE) verteilt. Die Bahnparameter umfassen also insbesondere einen Satz an Parametern, die, wie in den "Two-Line Elements" standardisiert, ausreichend Informationen enthalten, um die Position des Satelliten zu prinzipiell jedem beliebigen Zeitpunkt berechnen zu können. Die TLE's enthalten beispielsweise:
1. Numerische Exzentrizität
2. Mittlere Bewegung
3. Inklination
4. Rektaszension des aufsteigenden Knotens
5. Argument der Periapsis
6. Mittlere Anomalie
7. Epoche mit Datum und Uhrzeit

Optional können die TLE's ferner einen Widerstandskoeffizienten und weitere Störungskoeffizienten enthalten.

Als Epoche wird, wie in der Astronomie üblich, ein Zeitpunkt bezeichnet, auf den sich die Angaben der Bahnelemente beziehen. Ein bekanntes Beispiel für eine Epoche ist "J2000.0", was als der 1. Januar 2000, 11:58:55,816 der koordinierten Weltzeit (UTC) definiert ist.

Die Bahnparameter können ferner Informationen über den Abdeckungsbereich enthalten.

In einer ersten Ausführungsform der Erfindung werden die Bahnparameter bei einer Initialisierung des Verfahrens dem Sensor vorgegeben.

Dies bedeutet, dass der Sensor bei seiner Inbetriebnahme die Bahnparameter all derjenigen Satelliten vorgegeben bekommt, die als Kommunikationspartner des Sensors, das heißt als Empfänger der Sensordaten, infrage kommen.

Dies hat den Vorteil, dass der Sensor nicht selbst die Bahnparameter von den entsprechenden Satelliten einholen muss. Des Weiteren hat die Vorgabe der Bahnparameter den Vorteil, dass der Sensor sofort ab Inbetriebnahme beginnen kann, gezielt Sensordaten an die vorgesehenen Satelliten zu versenden.

Nachteilig an extern vorgegebenen Bahnparametern ist, dass diese unter Umständen nicht aktuell sind. Es gibt Satelliten, wozu insbesondere Satelliten zu zählen sind, die in relativ geringer Höhe über der Erdoberfläche kreisen, deren Bahnparameter in kurzen Abständen (z.B. wochenweise) immer wieder aktualisiert werden. Außerdem kann es grundsätzlich bei Satelliten zu unvorhergesehenen Ausfallzeiten oder unvorhergesehenen Änderungen der Umlaufbahn kommen. Schließlich ist es auch möglich, dass nach Inbetriebnahme des Sensors neue Satelliten hinzukommen. Auch ist es möglich, dass der Sensor selbst seine Position auf der Erde verändert, so dass nun andere Satelliten sich als Kommunikationspartner anbieten.

All die genannten Nachteile adressiert eine zweite Ausführungsform der Erfindung. Hierfür wird der Sensor zusätzlich zu der Sende- und Recheneinheit mit einer Empfangseinheit ausgestattet. Die Empfangseinheit ist dafür vorgesehen und eingerichtet, ein Satellitensignal eines Satelliten zu empfangen, wobei das Satellitensignal die Bahnparameter des Satelliten enthält. In dem Verfahren zur Kommunikation zwischen dem Sensor und dem Satelliten empfängt die Empfangseinheit des Sensors dann in einem ersten Schritt das Satellitensignal des Satelliten, bevor es in den darauffolgenden Schritten den Abdeckungszeitraum berechnet, die Sendeeinheit aktiviert und die Sensordaten absendet.

Die Satellitensignale können einmalig nach Inbetriebnahme des Sensors empfangen und weiterverarbeitet werden. Es ist jedoch vorteilhaft, wenn der Sensor in bestimmten Intervallen erneut die Satellitensignale der relevanten Satelliten abfragt (beziehungsweise empfängt), um die Bahnberechnungen der Satelliten gegebenenfalls anzupassen, wenn sich die Bahnparameter geändert haben sollten.

Nötig ist dafür die Ausstattung des Sensors mit einer Empfangseinheit. In einer Ausführungsform der Erfindung können die Sende- und Empfangseinheit zu diesem Zwecke vorteilhafterweise als kombinierte Sende-Empfangseinheit *(englisch: transceiver)* ausgestaltet werden.

Zu jedem Satelliten existiert ein Datensatz, welcher seine Bahn beschreibt. Dieser Datensatz ist typischerweise in einer Bodenstation verfügbar. Die Bodenstation stellt den Datensatz dem jeweiligen Satelliten zur Verfügung. Die Bodenstation aktualisiert immer wieder die Bahnparameter, beispielsweise dann, wenn sich die Umlaufbahn des Satelliten geändert hat.

In einer Ausführungsform der Erfindung enthält das Satellitensignal auch Informationen bezüglich der Identität des Satelliten. Diese dienen dazu, den Satelliten systemweit eindeutig identifizieren.

Die Identifikation geschieht beispielsweise durch Ausweisung mit einer sogenannten "unique ID" (UID), mit der jeder geostationäre oder die Erde umlaufende Satellit eindeutig identifiziert werden kann.

In einer weiteren Ausführungsform der Erfindung enthält das Satellitensignal ferner den Zeitpunkt, zu dem das Satellitensignal vom Satelliten abgesendet wurde.

Diese Information ist beispielsweise dann wichtig, wenn der Sensor keine eigene Zeiteinheit hat. Auch wenn der Sensor eine entsprechende Zeiteinheit hat, kann die von dem Satelliten empfangene Zeit beispielsweise genutzt werden, um die Systemzeit des Sensors mit der Zeit des Satelliten abzugleichen.

Ferner kann der Satellit auch Informationen über geplante Ausfallzeiten dem Sensor übermitteln. Dies kann insofern vorteilhaft sein, als dass der Sensor diese Ausfallzeiten bei der Planung der Aktivierung der Sendeeinheit berücksichtigen kann.

Die Position des Sensors, zumindest eine ungefähre Positionsangabe desselben, ist für die Berechnung des Abdeckungszeitraums (in anderen Worten: Kontaktzeitfenster) des Satelliten bezüglich des Sensors nötig. Es gibt verschiedene Möglichkeiten, wie die Position des Sensors bestimmt oder abgeschätzt werden kann.

In einer ersten Alternative wird die Position des Sensors bei einer Initialisierung des Verfahrens dem Sensor vorgegeben. Jegliche Positionsbestimmung durch den Sensor selbst entfällt hierdurch, so dass diese Art der Positionsvorgabe als die einfachste Methode erscheint. Allerdings ist diese Alternative nur für stationäre Sensoren und Sensoren, die sich während ihrer Betriebsdauer nur langsam im Verhältnis zu der vom Satelliten überstrichenen Fläche bewegen, sinnvoll.

In einer zweiten Alternative wird die Position des Sensors mittels eines globalen Positionsbestimmungssystems bestimmt.

Hierfür enthält der Sensor zum Beispiel ein konventionelles Empfangsmodul (auch: GPS-Empfänger) zur Bestimmung seiner Position über ein globales Navigationssatellitensystem. Vorteilhaft davon ist die breite Verfügbarkeit und Erprobung von GPS-Empfängern; nachteilhaft sind neben den anfallenden Kosten auch mögliche Schwierigkeiten bei der Positionsbestimmung, z.B. dann, wenn der GPS-Empfänger verdeckt bezüglich der Navigationssatelliten ist.

In einer dritten Alternative wird die Position des Sensors mittels der im empfangenen Satellitensignal enthaltenen Bahnparametern bestimmt bzw. abgeschätzt.

Mithilfe der Bahnparameter kennt der Sensor die Position des Satelliten zu jedem Zeitpunkt. Empfängt der Sensor die Satellitensignale, kann er daraus auf einen ungefähren Abdeckungsbereich schließen (falls der Satellit seinen Abdeckungsbereich nicht bereits ohnehin dem Sensor mitgeteilt hat). Je mehr Satellitensignale der Sensor empfängt (vorteilhafterweise aus mehreren Überflügen eines oder mehrerer Satelliten), desto besser kann der Sensor auf seine eigene Position schließen. Somit bestimmt der Sensor seine Position in Abhängigkeit der zu bestimmten Zeitpunkten sich in Sende-/Empfangsreichweite befindlichen Satelliten.

Daraus ergeben sich eine Reihe von Vorteilen:
Zum einen ist eine (exakte) Kenntnis der Position, in der ein Sensor installiert wird, nicht mehr notwendig. Der Sensor ist in der Lage, seine Position selbst zu bestimmen. Bei mobilen Sensoren kann die Position auch immer wieder aktualisiert werden.

Zum anderen ist eine Vorkonfiguration des Sensors bis auf Voreinstellungen, die sich auf eine Verbindung des Sensors mit dem Satelliten beziehen (z.B. Funkfrequenzen), nicht mehr notwendig. Alle Parameter, die der Sensor für die Berechnung des Abdeckungszeitraums benötigt, erhält der Sensor vom Satelliten.

Schließlich ist ein weiterer Vorteil des beschriebenen Verfahrens, dass es sowohl für stationäre als auch für bewegliche Sensoren anwendbar ist. Für bewegliche Sensoren gilt als einzige Einschränkung, dass ihre Positionsveränderung über eine gewissen Zeitraum im Vergleich zu der Ausdehnung des Abdeckungsbereichs klein sein muss. Um ein konkretes Beispiel zu nennen: Bei einem angenommenen Durchmesser des Satellitenabdeckungsbereiches von 1000 km und einer Umlaufzeit des Satelliten von 90 Minuten kann man beispielsweise in drei aufeinanderfolgenden Satellitenumläufen von je einem Kontaktfenster mit dem Satelliten ausgehen. D.h. wenn sich der Sensor zwischen den Überflügen nur wenige hundert Kilometer (z.B. 200 km) weit bewegt hat, wird man dennoch zu den ausgerechneten Kontaktzeiten mit dem Satelliten kommunizieren können.

Der Zeitraum, in dem die Sendeeinheit zum Senden von Sensordaten bereit (also: aktiviert) ist, wird als Sendezeitraum bezeichnet. Dies ist also der Zeitraum, in dem die Sendeeinheit im Allgemeinen Energie verbraucht. Der Sendezeitraum muss (zumindest teilweise) innerhalb des Abdeckungszeitraums liegen, da nur während des Abdeckungszeitraums Funkkontakt zwischen dem Sensor und dem Satelliten besteht. Vorteilhafterweise ist die Sendeeinheit außerhalb des Abdeckungszeitraums nicht aktiviert - die Energieersparnis, die das erfindungsgemäße Verfahren verspricht, wird ja gerade dadurch ermöglicht, dass das Einschalten der Sendeeinheit in Zeiten, in denen ohnehin kein Funkkontakt besteht, vermieden wird.

Der Abdeckungszeitraum eines auf der Erde befindlichen Sensors liegt für nicht-geostationäre Satelliten typischerweise zwischen wenigen Minuten, insbesondere 1-2 Minuten, und ungefähr fünfzehn Minuten. Befindet sich der Sensor nahe des Rands des im Allgemeinen kreisförmigen Abdeckungsbereichs, hat der Sensor beispielsweise nur 1-2 Minuten Funkkontakt zum Satelliten. Befindet er sich in der Mitte, sind es beispielsweise 10-15 Minuten. Da der Sensor den Abdeckungszeitraum präzise vorhersagen kann, ist es vorteilhaft, wenn der Sendezeitraum nicht wesentlich größer gewählt wird, als es für das Senden der Sensordaten an den Satelliten nötig ist. Ein Sendezeitraum von zum Beispiel 10 Sekunden, der natürlich, wie oben schon erwähnt, innerhalb des Abdeckungszeitraum liegen muss, sei hier exemplarisch erwähnt.

Die Erfindung betrifft des Weiteren ganz allgemein einen Sensor, der dafür geeignet ist, das beschriebene Verfahren durchzuführen.

Bei dem Sensor kann es sich beispielsweise um einen sogenannten IIoT-Sensor *(englisch: Industrial Internet of Things Sen*sor) handeln.

Die Erfindung betrifft im Speziellen einen Sensor, der eine Recheneinheit zum Berechnen einer Position eines Satelliten zu einem bestimmten Zeitpunkt und eine Sendeeinheit zum Senden von Sensordaten vom Sensor zu dem Satelliten umfasst. Die Recheneinheit ist hierbei dazu ausgestaltet, einen Abdeckungszeitraum mithilfe von Bahnparametern des Satelliten und der Position des Sensors zu berechnen, wobei der Abdeckungszeitraum demjenigen Zeitraum entspricht, in dem sich der Sensor in einem Abdeckungsbereich des Satelliten befindet. Die Sendeeinheit ist dazu ausgestaltet, während eines Sendezeitraums basierend auf dem berechneten Abdeckungszeitraums aktiviert zu werden, wobei als Sendezeitraum der Abdeckungszeitraum oder ein Teil davon gewählt wird. Die Sendeeinheit ist ferner dazu ausgestaltet, während des Sendezeitraums die Sensordaten vom Sensor zu dem Satelliten zu schicken. Optional weist der Sensor ferner eine Empfangseinheit zum Empfangen eines Satellitensignals des Satelliten auf, wobei das Satellitensignal die Bahnparameter des Satelliten enthält.

Für die Erläuterung der einzelnen Merkmale des Sensors wird zur Vermeidung von Wiederholungen auf die obenstehenden Erklärungen des entsprechenden Verfahrens verwiesen.

In einer Ausführungsform der Erfindung weist der Sensor des Weiteren eine Zeiteinheit zum Bereitstellen einer Systemzeit auf.

Bei der Zeiteinheit kann es sich um einen internen Zeitgeber handeln, beispielsweise einen Chip, der im Wesentlichen Zählerregister und einen Uhrenquarz als Taktgeber enthält. Der interne Zeitgeber ist mit einer Systemzeit synchronisiert.

Bei der Zeiteinheit kann es sich auch um eine sogenannte Software-Uhr handeln, die lediglich Zeitsignale eines externen Zeitgebers empfängt. Beispiele für externe Zeitgeber sind Zeitzeichensender wie z.B. der Langwellensender DCF77 aus Mainflingen bei Frankfurt am Main oder Zeitserver, die das Network Time Protocol (NTP) zur Verfügung stellen.

Die Zeiteinheit kann auch ein Empfänger einer satellitengestützten Zeit sein, z.B. aus einem Sat-basiertem Positionierungssystems (z.B. GPS, GLONASS) oder vom hier beschriebenen Satelliten selbst.

Des Weiteren weist der Sensor in der Regel das eigentliche Sensorelement (z.B. Temperaturfühler, Schwingungsmesser, Beschleunigungssensoren) sowie einen Messumformer *(englisch: transmitter)* auf. Der Messumformer wandelt die von dem Sensorelement erzeugten Daten in für die Kommunikation via Satellit verwendbare Daten um.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1:: einen mit einem Satelliten kommunizierenden Sensor; und
- Fig. 2:: einen in einem Abdeckungsbereich eines Satelliten befindlichen Sensor.

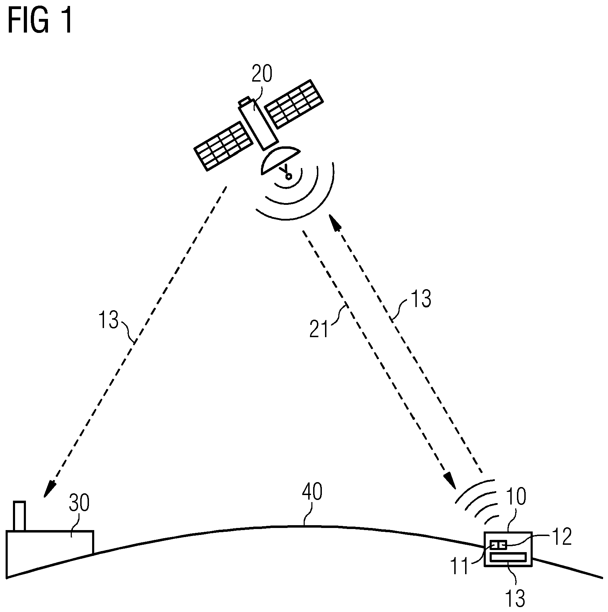

Die Abbildung 1, auch als Fig. 1 abgekürzt, zeigt eine Anordnung, die einen auf der Erde 40 befindlichen Sensor 10, einen Satelliten 20 und eine Bodenstation 30 umfasst. Der Satellit 20 ist dafür eingerichtet, ein Satellitensignal 21, in der Fachsprache auch "beacon" genannt, in periodischen Abständen auszusenden. Das Satellitensignal 21 kann im Prinzip von beliebigen Empfängern empfangen werden, die sich in Reichweite des Signals 21 befinden und dafür geeignet sind, derartige Signale 21 zu empfangen. Der Sensor 10 hat eine entsprechende Empfangseinheit 12 zum Empfang derartiger Satellitensignale 21. Der Sensor 10 hat ferner eine Sendeeinheit 11, die dafür ausgestaltet ist, Sensordaten 14 an den Satelliten 20 zu senden.

Das Satellitensignal 21 enthält Bahnparameter des Satelliten 20. Die Bahnparameter werden in der Fachsprache auch als Satellitenbahnelemente bezeichnet und können in einem standardisiertem Format, beispielsweise dem "Two-Line Elements"-Format, aufbereitet sein. Die Bahnparameter enthalten ausreichend Informationen, dass die Position des Satelliten 20 zu prinzipiell jedem beliebigen Zeitpunkt berechnet werden kann.

Dies macht sich der Sensor 10 zunutze. Er ist mit einer Recheneinheit 13 ausgestattet. Die Recheneinheit 13 berechnet basierend auf den empfangenen Bahnparametern und der Kenntnis der (eigenen) Position des Sensors 10, wann sich der Sensor 10 das nächste Mal wieder im Abdeckungsbereich des Satelliten 20 befindet. In anderen Worten berechnet die Recheneinheit 13 den Abdeckungszeitraum, in welchem Zeitraum sich der Sensor 10 also das nächste Mal wieder im Abdeckungsbereich des Satelliten 20 befindet.

Der Satellit 20 ist dafür ausgestaltet, die von dem Sensor 10 erhaltenen Sensordaten 14 an eine Bodenstation 30 weiterzuleiten. Die Bodenstation 30 kann ganz konkret beispielsweise ein (zentraler) Server, eine Anlage mit einer Verarbeitungseinheit oder auch ein weiterer Sensor sein. Der mit IIoT-Systemen vertraute Fachmann kann dies entsprechend einordnen.

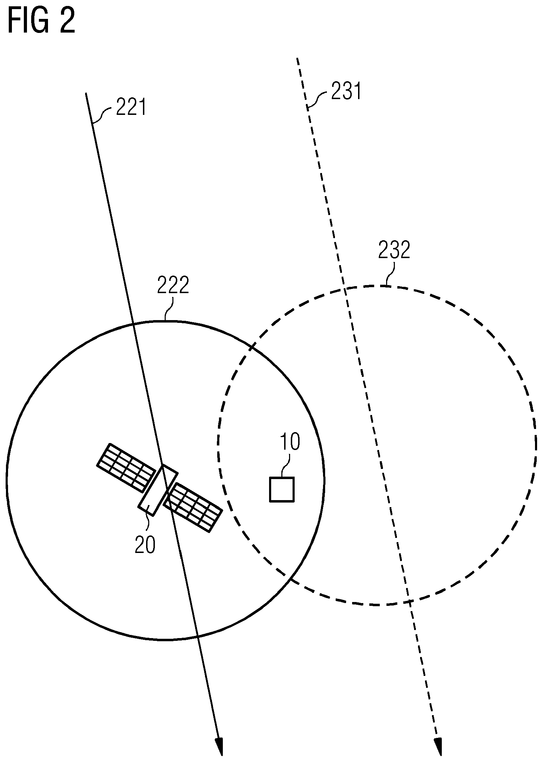

Die Abbildung 2, auch als Fig. 2 abgekürzt, zeigt einen Satelliten 20, der sich auf einer ersten Umlaufbahn 221 befindet. Diejenige Fläche auf der Erde, die sich in Funkreichweite des Satelliten 20 befindet, wird als Abdeckungsbereich bezeichnet und ist in der Abbildung 2 mit einem Kreis, in dessen Mittelpunkt sich der Satellit 20 befindet, illustriert. Um, rein exemplarisch, ein konkretes Zahlenbeispiel zu geben: Typische Abdeckungsbereiche nicht-geostationärer Satelliten, die dafür ausgestaltet sind, mit IIoT-Sensoren zu kommunizieren, können zum Beispiel Durchmesser zwischen 200 und 1000 Kilometer aufweisen.

In Abbildung 2 befindet sich der Sensor 10 gerade im ersten Abdeckungsbereich 222 des Satelliten 20. Der Sensor 10 kann nun mittels seiner Sendeeinheit 11 Sensordaten 14 an den Satelliten 20 senden.

Der Sensor 10 weiß auch, wann er den nächsten Überflug des Satelliten 20 zu erwarten hat. Mittels seiner Recheneinheit 13 kann er den Zeitraum berechnen, wann der Sensor 10 das nächste Mal im Abdeckungsbereich des Satelliten liegt. Dies ist mit dem gestrichelten, zweiten Abdeckungsbereich 232 in der Abbildung 2 symbolisiert. Der zweite Abdeckungsbereich 232 beschreibt den Abdeckungsbereich des Satelliten 20, wenn er sich zu einer bestimmten Zeit auf seiner zweiten Umlaufbahn 231 befindet.

Dank des "smarten", erfindungsgemäßen Sensors kann die Sendeeinheit des Sensors gezielt genau dann aktiviert werden, wenn sich der Sensor in Funkreichweite zu einem geeigneten Satelliten befindet. Dadurch kann Energie eingespart werden, die sonst zur Bereitschaft (Standby) der Sendeeinheit aufgewendet werden müsste.

## Patentansprüche

1. Verfahren zur Kommunikation zwischen einem Sensor (10) und einem Satelliten (20), wobei der Sensor (10) eine Sendeeinheit (11) zum Senden von Sensordaten (14) vom Sensor (10) zum Satelliten (20) und eine Recheneinheit (13) zum Berechnen einer Position des Satelliten (20) zu einem bestimmten Zeitpunkt aufweist und der Satellit (20) dafür ausgestaltet ist, die Sensordaten (14) zu empfangen und weiterzuleiten, wobei das Verfahren die folgenden Schritte aufweist:
- Berechnen eines Abdeckungszeitraums mithilfe von Bahnparametern des Satelliten (20) und der Position des Sensors (10), wobei der Abdeckungszeitraum demjenigen Zeitraum entspricht, in dem sich der Sensor (10) in einem Abdeckungsbereich des Satelliten (20) befindet,
- Aktivieren der Sendeeinheit (11) des Sensors (10) während eines Sendezeitraums basierend auf dem berechneten Abdeckungszeitraums, wobei als Sendezeitraum der Abdeckungszeitraum oder ein Teil davon gewählt wird, und
- Senden der Sensordaten (14) vom Sensor (10) an den Satelliten (20) während des Sendezeitraums.

2. Verfahren nach Anspruch 1,
wobei die Bahnparameter Informationen bezüglich der Umlaufbahn des Satelliten (20), insbesondere als "Two-Line Element"-Format, enthalten.

3. Verfahren nach einem der vorhergehenden Ansprüche,
wobei die Bahnparameter auch Informationen bezüglich des Abdeckungsbereichs des Satelliten (20) enthalten.

4. Verfahren nach einem der vorhergehenden Ansprüche,
wobei die Bahnparameter bei einer Initialisierung des Verfahrens dem Sensor (10) vorgegeben werden.

5. Verfahren nach einem der Ansprüche 1 bis 3,
wobei der Sensor (10) ferner eine Empfangseinheit (12) zum Empfangen eines Satellitensignals (21) des Satelliten (20) aufweist und das Verfahren in einem ersten Schritt umfasst:
- Empfangen eines Satellitensignals (21) durch die Empfangseinheit (12), wobei das Satellitensignal (21) die Bahnparameter des Satelliten (20) enthält.

6. Verfahren nach Anspruch 5,
wobei das Satellitensignal (21) auch Informationen bezüglich der Identität des Satelliten (20) enthält, die den Satelliten (20) systemweit eindeutig identifizieren.

7. Verfahren nach einem der Ansprüche 5 oder 6,
wobei das Satellitensignal (21) ferner den Zeitpunkt, zu dem das Satellitensignal (21) vom Satelliten (20) abgesendet wurde, enthält.

8. Verfahren nach einem der vorhergehenden Ansprüche,
wobei die Position des Sensors (10) bei einer Initialisierung des Verfahrens dem Sensor (10) vorgegeben wird.

9. Verfahren nach einem der Ansprüche 1 bis 7,
wobei die Position des Sensors (10) mittels eines globalen Positionsbestimmungssystems bestimmt wird.

10. Verfahren nach einem der Ansprüche 1 bis 7,
wobei die Position des Sensors (10) mittels der im empfangenen Satellitensignal (21) enthaltenen Bahnparameter bestimmt wird.

11. Sensor (10), umfassend eine Recheneinheit (13) zum Berechnen einer Position eines Satelliten (20) zu einem bestimmten Zeitpunkt und eine Sendeeinheit (11) zum Senden von Sensordaten (14) vom Sensor (10) zu dem Satelliten (20), wobei
- die Recheneinheit (13) dazu ausgestaltet ist, einen Abdeckungszeitraum mithilfe von Bahnparametern des Satelliten (20) und der Position des Sensors (10) zu berechnen, wobei der Abdeckungszeitraum demjenigen Zeitraum entspricht, in dem sich der Sensor (10) in einem Abdeckungsbereich des Satelliten (20) befindet,
- die Sendeeinheit (11) dazu ausgestaltet ist, während eines Sendezeitraums basierend auf dem berechneten Abdeckungszeitraums aktiviert zu werden, wobei als Sendezeitraum der Abdeckungszeitraum oder ein Teil davon gewählt wird, und
- die Sendeeinheit (11) ferner dazu ausgestaltet ist, während des Sendezeitraums die Sensordaten (14) vom Sensor (10) zu dem Satelliten (20) zu schicken.

12. Sensor (10) nach Anspruch 11,
wobei der Sensor (10) ferner eine Empfangseinheit (12) zum Empfangen eines Satellitensignals (21) des Satelliten (20) aufweist, wobei das Satellitensignal (21) die Bahnparameter des Satelliten (20) enthält.

13. Sensor (10) nach Anspruch 12,
wobei die Sendeeinheit (11) und die Empfangseinheit (12) als eine kombinierte Sende-Empfangseinheit ausgestaltet ist.

14. Sensor (10) nach einem der Ansprüche 11 bis 13,
wobei der Sensor (10) ferner eine Zeiteinheit zum Bereitstellen einer Systemzeit aufweist.

## Claims

1. Method for communication between a sensor (10) and a satellite (20), wherein the sensor (10) has a transmission unit (11) for transmitting sensor data (14) from the sensor (10) to the satellite (20) and a calculation unit (13) for calculating a position of the satellite (20) at a particular instant, and the satellite (20) is configured to receive and forward the sensor data (14), wherein the method comprises the following steps:
- calculation of a coverage time period with the aid of trajectory parameters of the satellite (20) and the position of the sensor (10), the coverage time period corresponding to the time period in which the sensor (10) is located in a footprint region of the satellite (20),
- activation of the transmission unit (11) of the sensor (10) during a transmission time period on the basis of the calculated coverage time period, the coverage time period or a part thereof being selected as the transmission time period, and
- transmission of the sensor data (14) from the sensor (10) to the satellite (20) during the transmission time period.

2. Method according to Claim 1,
wherein the trajectory parameters contain information relating to the orbital trajectory of the satellite (20), in particular as a two-line element format.

3. Method according to one of the preceding claims,
wherein the trajectory parameters also contain information relating to the footprint region of the satellite (20).

4. Method according to one of the preceding claims,
wherein the trajectory parameters are specified to the sensor (10) during an initialization of the method.

5. Method according to one of Claims 1 to 3,
wherein the sensor (10) furthermore has a reception unit (12) for receiving a satellite signal (21) of the satellite (20), and in a first step the method comprises:
- reception of a satellite signal (21) by the reception unit (12), the satellite signal (21) containing the trajectory parameters of the satellite (20).

6. Method according to Claim 5,
wherein the satellite signal (21) also contains information relating to the identity of the satellite (20), which uniquely identifies the satellite (20) system-wide.

7. Method according to one of Claims 5 and 6,
wherein the satellite signal (21) furthermore contains the instant at which the satellite signal (21) was transmitted by the satellite (20).

8. Method according to one of the preceding claims,
wherein the position of the sensor (10) is specified to the sensor (10) during an initialization of the method.

9. Method according to one of Claims 1 to 7,
wherein the position of the sensor (10) is determined by means of a global position determination system.

10. Method according to one of Claims 1 to 7,
wherein the position of the sensor (10) is determined by means of the trajectory parameters contained in the received satellite signal (21).

11. Sensor (10) comprising a calculation unit (13) for calculating a position of a satellite (20) at a particular instant and a transmission unit (11) for transmitting sensor data (14) from the sensor (10) to the satellite (20), wherein
- the calculation unit (13) is configured to calculate a coverage time period with the aid of trajectory parameters of the satellite (20) and the position of the sensor (10), the coverage time period corresponding to the time period in which the sensor (10) is located in a footprint region of the satellite (20),
- the transmission unit (11) is configured to be activated during a transmission time period on the basis of the calculated coverage time period, the coverage time period or a part thereof being selected as the transmission time period, and
- the transmission unit (11) is furthermore configured to send the sensor data (14) from the sensor (10) to the satellite (20) during the transmission time period.

12. Sensor (10) according to Claim 11,
wherein the sensor (10) furthermore has a reception unit (12) for receiving a satellite signal (21) of the satellite (20), the satellite signal (21) containing the trajectory parameters of the satellite (20).

13. Sensor (10) according to Claim 12,
wherein the transmission unit (11) and the reception unit (12) are configured as a combined transmission/reception unit.

14. Sensor (10) according to one of Claims 11 to 13,
wherein the sensor (10) furthermore has a time unit for providing a system time.

## Revendications

1. Procédé de communication entre un capteur (10) et un satellite (20), dans lequel le capteur (10) présente une unité émettrice (11) pour l'envoi de données de capteur (14) depuis le capteur (10) au satellite (20) et une unité calculatrice (13) pour le calcul d'une position du satellite (20) en un instant déterminé, et dans lequel le satellite (20) est conçu pour recevoir et transmettre les données de capteur (14), le procédé comportant les étapes suivantes :
- calcul d'une durée de couverture à l'aide de paramètres orbitaux du satellite (20) et de la position du capteur (10), la durée de couverture correspondant à la durée pendant laquelle le capteur (10) se trouve dans une zone de couverture du satellite (20),
- activation de l'unité émettrice (11) du capteur (10) pendant une durée d'émission en fonction de la durée de couverture calculée, où est choisie comme durée d'émission la durée de couverture ou une partie de celle-ci, et
- envoi des données de capteur (14) du capteur (10) au satellite (20) pendant la durée d'émission.

2. Procédé selon la revendication 1,
dans lequel les paramètres orbitaux contiennent des informations concernant l'orbite du satellite (20), en particulier sous format « à deux lignes ».

3. Procédé selon l'une des revendications précédentes, dans lequel les paramètres orbitaux contiennent également des informations concernant la zone de couverture du satellite (20) .

4. Procédé selon l'une des revendications précédentes, dans lequel les paramètres orbitaux sont imposés au capteur (10) lors d'une initialisation du procédé.

5. Procédé selon une des revendications 1 à 3,
dans lequel le capteur (10) comprend en outre une unité réceptrice (12) pour recevoir un signal de satellite (21) du satellite (20) et le procédé comprend, dans une première étape :
- la réception d'un signal de satellite (21) par l'unité réceptrice (12), le signal de satellite (21) contenant les paramètres orbitaux du satellite (20).

6. Procédé selon la revendication 5,
dans lequel le signal de satellite (21) contient également des informations concernant l'identité du satellite (20) qui identifient de façon univoque le satellite (20) dans le cadre du système.

7. Procédé selon l'une des revendications 5 ou 6,
dans lequel le signal de satellite (21) contient en outre le moment où le signal de satellite (21) a été émis par le satellite (20).

8. Procédé selon l'une des revendications précédentes, dans lequel la position du capteur (10) est imposée au capteur (10) lors d'une initialisation du procédé.

9. Procédé selon l'une des revendications 1 à 7, dans lequel la position du capteur (10) est déterminée au moyen d'un système de positionnement global.

10. Procédé selon l'une des revendications 1 à 7, dans lequel la position du capteur (10) est déterminée au moyen des paramètres orbitaux contenus dans le signal de satellite (21) reçu.

11. Capteur (10) comprenant une unité calculatrice (13) pour le calcul d'une position d'un satellite (20) en un instant déterminé et une unité émettrice (11) pour envoyer des données de capteur (14) du capteur (10) au satellite (20), dans lequel
- l'unité calculatrice (13) est conçue pour calculer une durée de couverture à l'aide de paramètres orbitaux du satellite (20) et de la position du capteur (10), la durée de couverture correspondant à la durée pendant laquelle le capteur (10) se trouve dans une zone de couverture du satellite (20),
- l'unité émettrice (11) est conçue pour être activée pendant une durée d'émission fonction de la durée de couverture calculée, où est choisie comme durée d'émission la durée de couverture ou une partie de celle-ci, et
- l'unité émettrice (11) est conçue en outre pour envoyer les données de capteur (14) du capteur (10) au satellite (20) pendant la durée d'émission.

12. Capteur (10) selon la revendication 11,
dans lequel le capteur (10) comprend en outre une unité réceptrice (12) pour recevoir un signal de satellite (21) du satellite (20), le signal de satellite (21) contenant les paramètres orbitaux du satellite (20).

13. Capteur (10) selon la revendication 12,
dans lequel l'unité émettrice (11) et l'unité réceptrice (12) sont conçues comme une unité combinée émettrice-réceptrice.

14. Capteur (10) selon l'une des revendications 11 à 13,
le capteur (10) présentant en outre une unité horloge pour fournir une heure du système.
